# EUROPÄISCHE PATENTSCHRIFT

(11) **EP 2 645 301 B1**
(45) Veröffentlichungstag und Bekanntmachung des Hinweises auf die Patenterteilung: **24.09.2014**
(21) Anmeldenummer: 13152965.3
(22) Anmeldetag: 29.01.2013
(51) Int. Cl.: G06K 7/00, G06K 7/10, G06K 7/14, G06K 19/06, G06T 7/00

(54) **Optoelektronische Vorrichtung zur Vermessung von Struktur- oder Objektgrößen**
Optoelectronic device for measurement of structural or object sizes
Dispositif optoélectronique destiné à mesurer les tailles de structure

(30) Priorität: 29.03.2012 DE 102012102702; 20.04.2012 DE 102012103495
(43) Veröffentlichungstag der Anmeldung: 02.10.2013
(73) Patentinhaber: SICK AG, 79183 Waldkirch (DE)
(72) Erfinder: Schüler, Pascal, 79331 Teningen (DE); Rinklin, Dietram, 79110 Freiburg (DE); Burghardt, Sascha, 79183 Waldkirch (DE)
(74) Vertreter: Hehl, Ulrich

(56) Entgegenhaltungen:
- EP-A1- 1 176 557

## Beschreibung

Die Erfindung betrifft eine optoelektronische Vorrichtung zur Vermessung von Struktur- oder Objektgrößen nach dem Oberbegriff von Anspruch 1.

Zur optischen Vermessung von Objekten muss das Erfassungs- oder Kamerasystem kalibriert sein. So sollen Abmessungen beliebiger Messabschnitte, Objekte oder Linienzüge in Bildpunkten bestimmt und dann auf Basis der Kalibrierung in eine physikalische Einheit wie Millimeter umgerechnet werden können. Da generell eine hohe Messgenauigkeit erwünscht ist, sollte auch die Kalibrierung möglichst exakt sein.

Die Umrechnung ist nur möglich, wenn das Erfassungssystem zu einer korrekten Zuweisung einer beliebigen Anzahl von Bildpunkte zu der physikalischen Einheit in der Lage ist. Dazu ist Zusatzwissen über die reale Messsituation erforderlich, das über die Kalibrierung ermittelt und dem Erfassungssystem zugeführt wird.

Häufig wird ein Modellansatz über die Optik des Erfassungssystems verwendet. Solche Modelle beinhalten zwangsläufig Vereinfachungen, und auch Fehlertoleranzen können sich aufakkumulieren, so dass das Modell die Realität meist nicht genau genug widerspiegelt.

Zur Kalibrierung werden oft spezielle Muster eingesetzt, etwa Schachbrettmuster. Solche Muster müssen exakt segmentiert werden, denn wenn beispielsweise Eckpunkte nicht genau gefunden wurden, ist unklar, wie gut die Kalibrierung gelungen ist, weil es keinerlei Rückmeldung über die Genauigkeit der Mustererfassung gibt. Außerdem muss das Erfassungssystem noch Zusatzinformationen über die tatsächlichen Größen der Musterelemente erhalten.

Es ist auch bekannt, in Bildern einen Maßstab unterzubringen, etwa ein Streichholz oder eine Skala. Das wird meist nur als optischer Bezug für einen menschlichen Betrachter genutzt, nicht aber für eine Kalibrierung zur automatischen Umrechnung. Selbst wenn anhand einer solchen Skala kalibriert werden soll, muss dem Erfassungssystem noch auf anderem Wege mitgeteilt werden, welche absolute Größe die Skala hat, also wie groß ein Streichholz oder wie groß der metrische Abstand zwischen zwei Skaleneinteilungen ist.

Eine andere Anwendung von Kameras als für Vermessungsaufgaben ist das Lesen von Codes. Derartige kamerabasierte Codeleser lösen die noch weit verbreiteten Barcodescanner zunehmend ab. Mit Hilfe eines Bildsensors werden Objekte mit den darauf befindlichen Codes aufgenommen, in den Bildern die Codebereiche identifiziert und dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

Aus der DE 10 2005 003 254 B4 ist bekannt, einen optoelektronischen Sensor zur Absicherung einer Maschine dadurch zu parametrieren, dass ein optischer Code mit Parametrierinformationen erfasst wird. Der Sensor wird aber nicht für Vermessungen eingesetzt, und die Parametrierinformationen enthalten keinerlei Bezug zu physikalischen Längen.

In der US 2008/0143838 A1 wird ein Codeleser für den Handbetrieb anhand eines eingelesenen Kalibriercodes eingerichtet. Auch dieser Codeleser ist nicht für Vermessungsanwendungen geeignet, und der Kalibriercode enthält keine Informationen über physikalische Abmessungen.

Aus der EP 1 176 557 A1 ist ein Verfahren zur Kalibrierung einer Kamera bekannt, bei dem als Kalibrierungsbild ein schwarzer Kreis mit äußeren, radialen Strichen präsentiert wird. Diese Striche codieren zugleich nach Art eines Barcodes den Durchmesser der Scheibe, und daraus wird ein Umrechnungsfaktor bestimmt, welcher die Größe eines Pixels in metrischen Einheiten angibt. Weiterhin wird überprüft, ob die beiden Halbachsen des Kreises in dem aufgenommenen Bild übereinstimmen. Daraufhin wird gegebenenfalls das Bild so längs der kürzeren Halbachse gestreckt, dass wieder ein Kreis und somit ein entzerrtes Bild entsteht, wie es auch aus orthogonaler Perspektive aufgenommen würde.

Es ist daher Aufgabe der Erfindung, die Kalibrierung eines optischen Vermessungssystems zu verbessern.

Diese Aufgabe wird durch eine optoelektronische Vorrichtung zur Vermessung von Struktur- oder Objektgrößen nach Anspruch 1 gelöst. Dabei geht die Lösung von dem Grundgedanken aus, die notwendigen Informationen über dessen absolute Abmessungen direkt in dem Kalibrierziel unterzubringen. Dazu wird als Kalibrierziel ein optischer Code eingesetzt, den die zugleich als Codeleser ausgebildete Vorrichtung zur Vermessung liest und decodiert. Damit steht einerseits die Abmessung des Kalibriercodes in Bildpunkten aus den erfassten Bilddaten und andererseits zum Vergleich die absolute Größe des Kalibriercodes aus dem Auslesen der in dem Kalibriercode selbst codierten Größenangabe zur Verfügung. Daraus kann ein entsprechender Skalierungsfaktor berechnet werden, der angibt, wie viele Bildpunkte einer physikalischen Längeneinheit wie einem Millimeter entsprechen. Mit Hilfe dieses Skalierungsfaktors können anschließend Abmessungen beliebiger Strukturelemente in Bildpunkten erfasst und in physikalische, beispielsweise metrische Längeneinheiten transformiert werden. Eine spezielle zu vermessende Struktur ist der Code selbst oder dessen Modulgröße, denn Kenntnis dieser Abmessungen in absoluten Einheiten wird in manchen Anwendungen gewünscht.

Die in dem Kalibriercode enthaltene Größenangabe betrifft eine beliebige Abmessung, beispielsweise seine Breite, Höhe, Diagonale oder auch eine einzelne Modulbreite. Welche Abmessung codiert ist, wird entweder der Vorrichtung vorab mitgeteilt, oder auch diese Information ist in dem Kalibriercode enthalten. Die Struktur, aus welcher die für die Kalibrierung verwendete Abmessung in Bildpunkten bestimmt wird, sollte dann der eincodierten Größenangabe entsprechen, oder es wird geeignet umgerechnet.

Die Erfindung hat den Vorteil, dass die Kalibrierung erheblich vereinfacht und zugleich besonders genau wird. Damit werden aus einer ungenügenden Kalibrierung resultierende Ungenauigkeiten der Vermessung verhindert, wie sie etwa bei Kalibrierungen mit Hilfe eines optischen Modells auftreten. Da der Kalibriercode selbst seine eigene Grö-ßenangabe enthält und diese Information beim Codelesen verlustfrei übertragen wird, können keine unrichtigen Skalierungsfaktoren aufgrund von Fehlinformationen oder Fehlmessungen des Kalibrierziels ermittelt werden.

Die Auswertungseinheit ist bevorzugt dafür ausgebildet, beim Auslesen des Kalibriercodes eine Kennung zu überprüfen, anhand derer der Kalibriercode als solcher erkennbar ist. Dadurch ist gesichert, dass nur ein Kalibriercode und nicht eine zufällige Größeninformation für die Kalibrierung verwendet wird. In einer bevorzugten Ausführungsform ist sogar möglich, dass ein anhand der Kennung erkannter Kalibriercode die Kalibrierung auslöst. Sobald dann also die entsprechend auf automatische Kalibrierung eingestellte Vorrichtung einen für diese Vorrichtung gültigen Kalibriercode erkennt, wird der Skalierungsfaktor geprüft oder neu berechnet.

Die Auswertungseinheit ist bevorzugt dafür ausgebildet, während des Kalibriervorgangs die Abmessungen des Kalibriercodes von Ecke zu Ecke zu bestimmen. Dementsprechend sollte sich auch die in dem Kalibriercode enthaltene Größenangabe auf diese Abmessung beziehen, oder sie wird entsprechend umgerechnet. Ein Bezug auf die Ecken ist besonders vorteilhaft, weil damit die größtmögliche Struktur ausgenutzt wird und dadurch die Kalibrierung beziehungsweise Bestimmung des Skalierungsfaktors besonders genau ist.

Die Auswertungseinheit ist bevorzugt dafür ausgebildet, für die Bestimmung des Skalierungsfaktors eine fehlerfreie Lesung des Kalibriercodes zu verwenden. Wenn die Bildfolge schnell genug für eine Mehrfachlesung ist, wird eine fehlerfreie Lesung ausgewählt, gegebenenfalls aber auch die Kalibrierung mit Lesung des Kalibriercodes wiederholt. Fehlerfrei bedeutet hier nicht nur, dass es möglich war, die Codeinformation überhaupt zu erfassen, was ohnehin Grundvoraussetzung ist, sondern dass der Kalibriercode ohne Fehler abgetastet werden konnte. Denn dann sind auch die Abmessungen in Bildpunkten fehlerfrei erfasst, beispielsweise die Eckpunkte, welche die Breite und Höhe des Kalibriercodes festlegen. Als ein Kriterium für eine fehlerfreie Lesung kann herangezogen werden, ob eine Fehlerkorrektur, wie eine Reed-Solomon-Korrektur, zum Bestimmen des Codeinhalts erforderlich war. Auf diese Weise gibt die Codelesung eine implizite Rückmeldung darüber, ob die Kalibrierung erfolgreich war und der Skalierungsfaktor genau bestimmt wurde. Denn wenn keine Fehlerkorrektur erforderlich ist, war auch die Bildsegmentierung und Bestimmung der Coderegion erfolgreich, somit wird die Position der Ecken präzise bestimmt. Andernfalls wäre nämlich bei diesen Vorverarbeitungsschritten das Abtastgitter nicht optimal platziert, und es würden Fehlerkorrekturbits verbraucht. Ein sauberer Decodiervorgang ohne Notwendigkeit einer Fehlerkorrektur gibt somit Auskunft über die Genauigkeit der segmentierten Eckpunke, damit des Skalierungsfaktors und der Kalibrierung als Ganzes.

Die Auswertungseinheit ist bevorzugt dafür ausgebildet, absolute Geometrieinformationen aus dem Kalibriercode auszulesen und eine Transformationsvorschrift zu bestimmen, welche die relative Geometrie des Kalibriercodes in den Bilddaten in eine absolute Geometrie überführt. Aufgrund von perspektivischen Verzerrungen wird der Kalibriercode im allgemeinen nicht so aufgenommen, dass in den zweidimensionalen Bilddaten seine tatsächliche Geometrie erkennbar ist. Beispielsweise wird ein rechteckiger Kalibriercode zu einem Trapez verzerrt. Die absolute Geometrie, nämlich die rechteckige Gestalt, ist aber samt Abmessungen vorab bekannt oder ebenfalls Teil der Informationen, die aus dem Kalibriercode entnommen werden. Somit ist möglich, diejenige Transformation zu bestimmen, welche die relative Geometrie des Kalibriercodes, also beispielsweise ein Trapez, in seine tatsächliche oder absolute Geometrie zu überführen, nämlich in dem Beispiel ein Rechteck. Danach steht eine Transformation zur Verfügung, um die perspektivische Verzeichnung zu korrigieren, so dass der Kalibriervorgang unabhängig von der Orientierung des Codelesers wird. Dadurch wird die Genauigkeit der späteren Vermessungen erhöht und die Vermessung unter beliebigen Raumwinkeln ermöglicht, weil Verzeichnungen herausgerechnet werden.

Die Auswertungseinheit ist bevorzugt dafür ausgebildet, eine Fehlkalibrierung zu erkennen, indem die Transformationsvorschrift auf einen Code in den Bilddaten angewandt und geprüft wird, ob der derart transformierte Code eine erwartete absolute Geometrie aufweist. Nach dem Kalibriervorgang kann sich die Orientierung der Kamera absichtlich oder unabsichtlich verändern. Danach passt die Transformationsvorschrift nicht mehr, die bei dem Kalibriervorgang ermittelt wurde. Das wird daran erkannt, dass das Anwenden der Transformationsvorschrift auf einen Code nicht mehr zu dessen erwarteter Geometrie führt, beispielsweise einem Rechteck.

Die Auswertungseinheit ist bevorzugt dafür ausgebildet, die Transformationsvorschrift auf einen Teilbereich der Bilddaten anzuwenden, um ein perspektivisch entzerrtes Bild zu erzeugen. Dies dient der Visualisierung, somit auch der Überprüfung der Decodier- und Messergebnisse, und kann dadurch unterstützt werden, dass zusätzliche Informationen in das Bild eingeblendet werden, etwa ein Bildtitel, eine decodierte Codeinformation oder eine gemessene Länge. Als Format kann ein strukturiertes Overlay-Format wie XML verwendet werden. Das lässt sich nicht nur in wohldefinierter Weise anzeigen, sondern erhält auch die gesamte Bildinformation, statt Pixel durch die Zusatzinformation zu überschreiben.

Die Vorrichtung ist bevorzugt als kamerabasierter Codeleser ausgebildet, dessen Lichtempfangselement ein matrix- oder zeilenförmiger Bildsensor ist. Ein solcher kamerabasierter Codeleser kann eine Vielzahl verschiedener Codes erfassen und zugleich für die optische Vermessung eingesetzt werden.

Die Auswertungseinheit ist bevorzugt dafür ausgebildet, durch Mittelung oder Interpolation Bildpunkte mit einer feineren Auflösung zu bestimmen als die Pixelauflösung des Bildsensors. Durch eine solche Sub-Pixel-Auflösung kann die Vermessung Genauigkeiten über das physische Auflösungsvermögen des Bildsensors hinaus erreichen.

Die Auswertungseinheit ist bevorzugt für die Decodierung von 1 D-Codes und 2D-Codes ausgebildet, insbesondere von Codes, die sich aus Balken, rechteckigen oder quadratischen Moduleinheiten zusammensetzen. 1 D-Codes sind üblicherweise Barcodes. Einige nicht abschließende Beispiele für gängige 2D-Codes sind DataMatrix, QR-Code, Aztec-Code, PDF417 oder MaxiCode.

Vorzugsweise ist eine Abstandsmesseinheit vorgesehen, insbesondere nach dem Prinzip der Lichtlaufzeitbestimmung, um den Abstand zu einem gelesenen Code oder einem erfassten Objekt zu bestimmen. Derartige Abstandsmessungen werden häufig für eine Autofokuseinstellung eingesetzt. Damit werden aber zugleich Kalibriercode und zu vermessende Strukturen nicht nur in zweidimensionalen Bilddaten erfasst, sondern es kann zusätzlich als dritte Dimension der Leseabstand bestimmt werden.

Vorteilhafterweise ist ein Speicher vorgesehen, um zusammen mit dem Skalierungsfaktor den Kalibrier-Leseabstand abzulegen, in dem der Kalibriercode während des Kalibriervorgangs erfasst wurde, und wobei die Auswertungseinheit dafür ausgebildet ist, mit Hilfe des Kalibrier-Leseabstands die Abmessungen erfasster Strukturen oder Objekte anhand von deren tatsächlichem Abstand während der Erfassung anzupassen. Der Skalierungsfaktor gilt zunächst nur für den Leseabstand beziehungsweise die Fokuseinstellung während der Erfassung des Kalibriercodes. Mit Hilfe des gespeicherten Leseabstands während der Kalibrierung und dem tatsächlichen Leseabstand bei einer Vermessung kann entsprechend reskaliert werden, so dass die Beschränkung auf einen Leseabstand beziehungsweise das Einführen von Vermessungsfehlern bei geänderten Leseabständen entfällt.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Kamera;
- Fig. 2: die Darstellung eines 2D-Codes und dessen Codeinhalt zur Erläuterung eines Kalibrierverfahrens für eine Vermessung in absoluten Längeneinheiten;
- Fig. 3: im linken Teil einen Kalibriercode, der unter einer perspektivischen Verzerrung aufgenommen wurde, und im rechten Teil den verzerrungsfreien Kalibriercode nach einer Transformation;
- Fig. 4: die beispielhafte Anwendung der Transformation auf zwei Punkte eines Objekts;
- Fig. 5: im linken Teil einen beispielhaft verzerrt aufgenommenen Code mit trapezförmiger Umhüllenden und im rechten Teil den Code mit immer noch trapezförmiger Umhüllenden nach der Transformation; und
- Fig. 6: ein beispielhaftes Messbild mit einer darin bestimmten metrischen Abmessung.

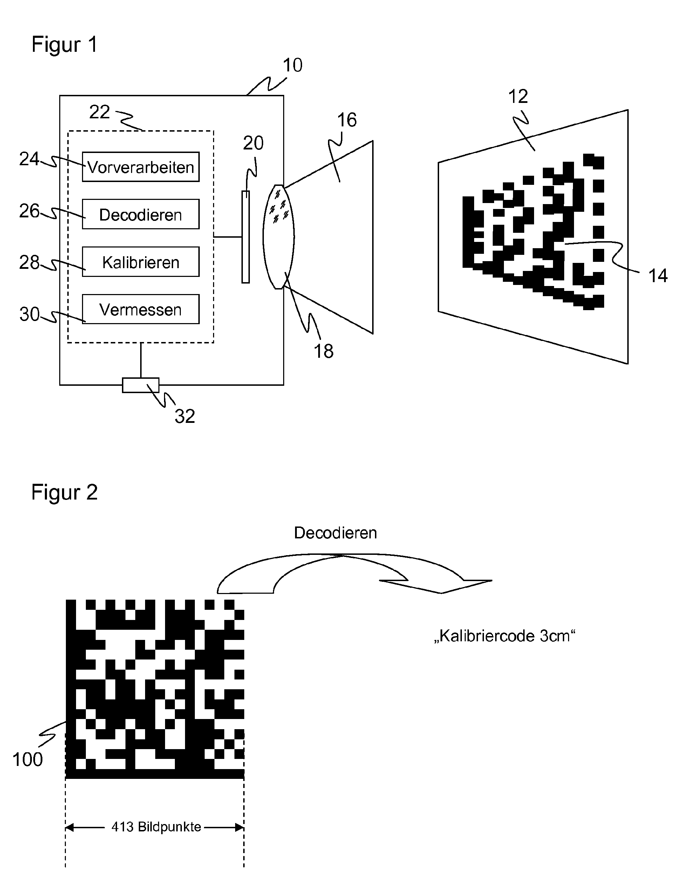

Figur 1 zeigt eine schematische Schnittdarstellung einer Kamera 10. Die Kamera wird einerseits zur Vermessung von Strukturen eingesetzt und ist zugleich ein kamerabasierter Codeleser, denn sie ist in der Lage, Codes zu erfassen und deren Inhalte auszulesen. Die Erfindung wird an dem Beispiel einer Kamera beschrieben. Grundsätzlich ist aber auch vorstellbar, dass Bilddaten mit einem anderen optischen Prinzip gewonnen werden, etwa durch Abtastung mit einem Lesestrahl.

Die Kamera 10 erfasst einen Aufnahmebereich 12, in dem sich zu lesende Codes 14 oder beliebige andere Objekte befinden können. Das Licht aus dem Aufnahmebereich 12 wird durch ein Aufnahmeobjektiv 16 empfangen, in dem nur eine dargestellte Linse 18 die Aufnahmeoptik repräsentiert. Ein Bildsensor 20, beispielsweise ein CCD- oder CMOS-Chip mit einer Vielzahl von zu einer Zeile oder einer Matrix angeordneten Pixelelementen, erzeugt Bilddaten des Aufnahmebereichs 12 und gibt diese an eine als Ganzes mit Bezugszeichen 22 gekennzeichnete Auswertungseinheit weiter. Für eine bessere Erfassung des Codes 14 oder anderer Objekte in dem Aufnahmebereich 12 kann die Kamera 10 mit einer nicht dargestellten aktiven Beleuchtung ausgerüstet sein.

Die Auswertungseinheit 22 ist auf einem oder mehreren digitalen Bausteinen implementiert, beispielsweise Mikroprozessoren, ASICs, FPGAs oder dergleichen, die auch ganz oder teilweise außerhalb der Kamera 10 vorgesehen sein können. Dargestellt sind nicht die physischen, sondern die funktionalen Module der Auswertungseinheit 22, nämlich eine Vorverarbeitungseinheit 24, eine Decodiereinheit 26, eine Kalibriereinheit 28 und eine Vermessungseinheit 30.

In der Vorverarbeitungseinheit 24 werden die Bilddaten beispielsweise zunächst gefiltert, geglättet, helligkeitsnormiert, auf bestimmte Bereiche zugeschnitten oder binarisiert. Zudem werden interessante Strukturen erkannt und segmentiert, beispielsweise einzelne Objekte, Linien oder Codebereiche.

Die Decodiereinheit 26 ist in der Lage, Codes in derart identifizierten Codebereichen zu decodieren, also die in den Codes enthaltene Information auszulesen.

Die Kalibriereinheit 28 dient einer Kalibrierung der Kamera 10 auf absolute physische Längeneinheiten. Diese Kalibrierung basiert auf dem Auslesen eines speziellen Kalibriercodes mit Hilfe der Decodiereinheit 26 und wird weiter unten mit Bezugnahme auf Figur 2 genauer erläutert.

In der Vermessungseinheit 30 könnten Strukturen, wie Objekte, Linien oder Codes, vermessen werden. Die Abmessungen werden zunächst in Bildpunkten bestimmt. Durch diverse Interpolations-, Mlttelungs- oder Filterverfahren ist es oft möglich, eine Subpixelauflösung zu erzielen, bei der die Bildpunkte eine feinere Auflösung bieten als die physische Auflösung des Bildsensors 20. Mit Hilfe eines Skalierungsfaktors, der vorab in der Kalibriereinheit 28 bestimmt wurde und der eine Umrechnung von Bildpunkten in eine physikalische Einheit angibt, werden die Abmessungen in ein absolutes, beispielsweise metrisches Einheitensystem umgerechnet.

An einem Ausgang 32 der Kamera 10 können Daten ausgegeben werden, und zwar sowohl Auswertungsergebnisse, wie gelesene Codeinformationen oder ermittelte Abmessungen in absoluten Einheiten, als auch Daten in verschiedenen Verarbeitungsstufen, wie Rohbilddaten, vorverarbeitete Bilddaten, Abmessungen in Bildpunkten, identifizierte Objekte, noch nicht decodierte Codebilddaten oder auch der Skalierungsfaktor selbst.

Unter Bezugnahme auf die Figur 2 wird nun die Kalibrierung erläutert. Figur 2 zeigt einen Kalibriercode 100, wobei es sich hier rein beispielhaft um einen DataMatrix-Code handelt. Gleichermaßen können aber auch beliebige andere Codetypen verarbeitet werden, solange die Decodiereinheit 26 in der Lage ist, den Code zu lesen. Häufig bestehen derartige Codes aus Balken oder rechteckigen beziehungsweise quadratischen Moduleinheiten. Für robustere Codelesung und um eine Rückmeldung über die Güte der Kalibrierung zu erhalten, werden bevorzugt Codes mit Fehlerkorrekturmechanismen als Kalibriercode genutzt.

Der Kalibriercode 100 soll der Kamera 10 über seinen Codeinhalt das notwendige Wissen über die physikalische Welt und damit die Beziehung zwischen der Größe eines Bildpunktes und einer absoluten Längeneinheit vermitteln, also den Skalierungsfaktor. Deshalb enthält der Kalibriercode 100 als Codeinformation eine Größenangabe über sich selbst, hier in metrischen Einheiten. Zugleich ist vorteilhaft, wenn die Codeinformation den Kalibriercode 100 auch als solchen erkennbar macht.

Wie rechts in der Figur 2 zu erkennen, ist der Inhalt des beispielhaft dargestellten Kalibriercodes 100 nach Auslesen durch die Decodiereinheit 26 "Kalibriercode 3cm". Daher weiß die Kamera 10, dass es sich um einen Kalibriercode handelt und dass dieser Kalibriercode 100 in absoluten Längeneinheiten 3 cm groß ist. Hierbei wird noch die Übereinkunft unterstellt, dass die Größenangabe sich auf die Breite bezieht. Das könnte auch zusätzlich über den Codeinhalt vermittelt werden, beispielsweise durch den Codeinhalt "Kalibriercode, Breite: 3 cm". Die Breite ist nur ein Beispiel für eine Größenangabe, ebenso gut kann die Höhe, die Diagonale, die physikalische Abmessung eines Codemoduls und jede sonstige identifizierbare Abmessung des Kalibriercodes 100 verwendet werden.

Es hat allerdings Vorteile, wenn die Kalibrierung über eine möglichst große Struktur des Kalibriercodes 100 erfolgt, weil dann der Skalierungsfaktor besonders genau wird. Dafür eignen sich vorzugsweise Breite, Höhe oder Diagonale. Zudem werden Eckpunkte eines Codes von der Vorverarbeitungseinheit 24 und der Decodiereinheit 26 recht exakt erkannt, denn ansonsten könnte der Kalibriercode 100 meist gar nicht gelesen werden. Um ganz sicher zu sein, dass die Eckpunkte des Kalibriercodes 100 gut bestimmt wurden, wird eine Erfassung des Kalibriercodes 100 mit zugehöriger Bestimmung der Eckpunkte für die Kalibrierung herangezogen, bei dem keine Korrekturbits beispielsweise gemäß Reed-Solomon-Korrektur verwendet werden mussten. Ein solcher Kalibriercode 100 wurde ohne Fehler abgetastet und gelesen, so dass auch die Positionen und damit die Abstände der Eckpunkte verlässlich sind.

Aus diesen Eckpunkten bestimmt die Vermessungseinheit 30 die Breite des erfassten Kalibriercodes in Bildpunkten. In dem in dieser Hinsicht willkürlichen Beispiel der Figur 2 lautet das Resultat 413 Bildpunkte. Somit ist der Kalibriereinheit 28 nunmehr bekannt, dass 413 Bildpunkte 3 cm entsprechen. Das Verhältnis dieser beiden Werte ist der gesuchte Skalierungsfaktor zur Umrechnung von Bildpunkten in metrische Längeneinheiten.

In einer konkreten, beispielhaften bevorzugten Ausführungsform läuft das Kalibrierverfahren wie folgt ab. Zunächst wird in einem Auto-Setup-Modus nach Bildeinstellung und Fokusverstellung der Kalibriercode 100 decodiert und anhand seiner Kennung als solcher erkannt. Die Kamera 10 schaltet daraufhin in den Kalibriermodus.

Dann werden die Abmessungen eines Codemoduls des Kalibriercodes 100 in Bildpunkten berechnet, indem die Gesamthöhe und Gesamtbreite durch die aus der Codeart, mit der erfolgreich decodiert werden konnte, bekannte Codemodulanzahl n x m in Breiten- und Höhenrichtung dividiert wird. Das Ergebnis kann Bruchteile von physischen Pixeln des Bildsensors 20 enthalten, weist also eine Subpixel-Auflösung auf. Die Berechnung kann für verschiedene erkannte Codemodule wiederholt und gemittelt werden.

Der Kalibriercode 100 enthält in dieser Ausführungsform anders als im Beispiel der Figur 2 die Größenangabe für ein Codemodul, nicht für die Gesamtbreite. Andernfalls könnte dies aber auch wie soeben erläutert umgerechnet werden. Mit den Informationen über die Größe eines Codemoduls sowohl in Bildpunkten als auch in Millimeter kann der Skalierungsfaktor berechnet werden, der angibt, wie groß ein Bildpunkt in Millimetern ist oder umgekehrt.

Dieser Skalierungsfaktor, der zugleich eine Kalibrierungskonstante darstellt, wird vorzugsweise für die spätere Verwendung gespeichert. Die Vermessungseinheit 30 kann den Skalierungsfaktor dann im weiteren Betrieb nach Abschluss von Kalibrierung und Auto-Setup verwenden, indem durch einfaches Multiplizieren Abmessungen der zu vermessenden Strukturen in Bildpunkten in absolute Abmessungen umgerechnet werden.

Der Skalierungsfaktor gilt zunächst nur für den Leseabstand, in dem er bestimmt wurde. Dieser Leseabstand wird häufig an der zugehörigen Fokuseinstellung festgemacht. Es ist bei Kenntnis der Syntax des Codeinhalts des Kalibriercodes 100 sehr einfach auch noch in der Vermessungsanwendung vor Ort möglich, einen passenden Kalibriercode 100 zu erzeugen. Damit ergibt sich eine große Flexibilität für unterschiedliche Leseabstände.

Denkbar ist auch, die Kamera 10 mit einer Abstandsmessung beispielsweise nach dem Lichtlaufzeitprinzip auszurüsten. Dies wird für eine Autofokuseinheit ohnehin häufig in einer Kamera 10 verwendet. Dann kann der ursprüngliche Leseabstand, unter dem der Skalierungsfaktor anhand des Kalibriercodes 100 bestimmt wurde, abgespeichert werden. Anhand dieses ursprünglichen Leseabstands und des tatsächlichen Leseabstands während einer Vermessung kann dann die Vermessungseinheit 30 eine Reskalierung vornehmen. Da in diese Reskalierung Annahmen einfließen, ist sie nicht ganz so exakt wie eine spezifische Rekalibrierung mit einem passenden Kalibriercode 100, kann jedoch zumindest in gewissem Rahmen einen verstellbaren Lese- beziehungsweise Vermessungsabstand ermöglichen.

Die bisher beschriebene Vermessung funktioniert bei geringer Schrägstellung (Skew) der Kamera 10, also anders ausgedrückt bei hinreichend orthogonaler Ausrichtung der optischen Achse der Kamera 10 zu den zu lesenden Codes 14 oder den zu vermessenden Objekten hoch präzise. Diese Orientierung der Kamera 10 ist aber nicht immer gewährleistet, sondern es ist im Gegenteil beispielsweise bei glänzenden Oberflächen eine gewisse Abweichung sogar erwünscht, um nicht zu viel Licht in die Kamera 10 zurückzureflektieren. Dadurch treten perspektivische Verzerrungen auf, welche die Genauigkeit der Vermessung beeinträchtigen.

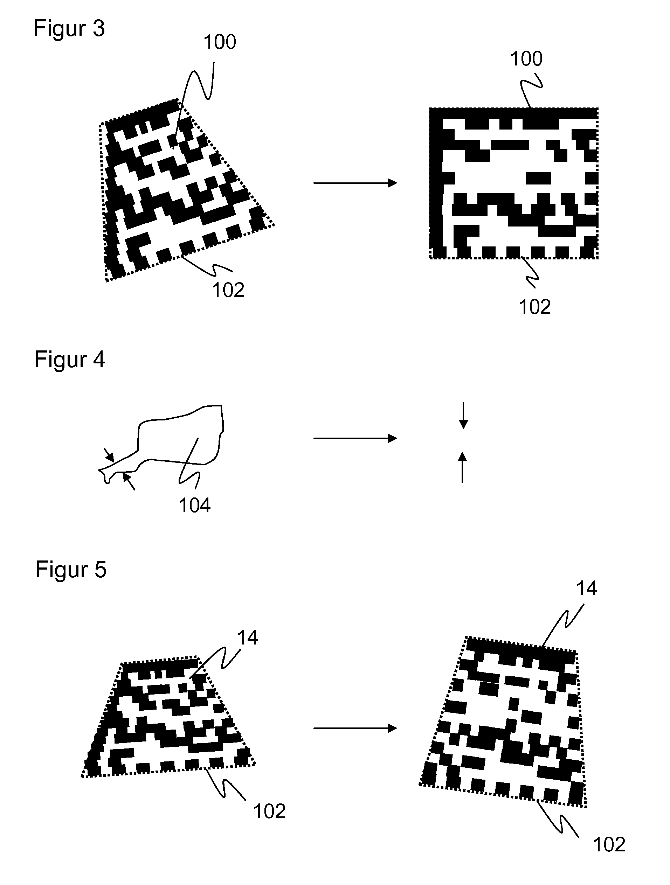

Figur 3 zeigt im linken Teil den Kalibriercode 100, der unter einer derartigen perspektivischen Verzerrung aufgenommen wurde. Die Umhüllende 102 des Kalibriercodes 100 ist deshalb nicht mehr quadratisch oder rechteckig, sondern trapezförmig. Die Vermessung wird dadurch ungenau, weil die Unabhängigkeit vom Ort der Messung innerhalb des von der Kamera 10 aufgenommenen Bildes verloren geht. Deshalb ist in einer Ausführungsform vorgesehen, diese perspektivische Verzeichnung zu korrigieren.

Dies wird anhand des Beispiels eines rechteckigen Kalibriercodes 100 beschrieben. Andere Geometrien sind aber ebenso denkbar. Aufgrund der Codelesung in der Decodiereinheit 26 sind die Positionen der vier Eckpunkte des Kalibriercodes 100 mit großer Genauigkeit bekannt. Andererseits ist bekannt, welche Geometrie der Kalibriercode 100 tatsächlich aufweist. Dieses Wissen kann vorgegeben sein, weil beispielsweise bekannt ist, dass der Code rechteckig mit einem bestimmten Verhältnis von Höhe zu Breite (aspect ratio) sein muss. Alternativ kann die Geometrieinformation über den Codeinhalt vermittelt werden, beispielsweise über einen Codeinhalt wie "Kalibriercode: Rechteck, Breite 3cm, Höhe 4cm".

Deshalb ist es möglich, eine Transformation beispielsweise über eine Abbildungsmatrix M zu berechnen, welche die Eckpunkte des verzerrten Kalibriercodes 100 in die tatsächliche Geometrie eines Rechtecks bekannter Abmessungen überführt. Diese Umrechnung ist durch den Pfeil zu dem rechten Teil der Figur 3 angedeutet, in dem der verzerrungsfreie, rechteckige Kalibriercode 100 nach der Transformation gezeigt ist.

Für die Transformation ist im Prinzip ein beliebiges normiertes Koordinatensystem als Zielkoordinatensystem denkbar. Vorzugsweise wird ein orthogonales, metrisches Koordinatensystem mit für die Vermessungsfunktion geeigneten metrischen Einheiten von beispielsweise 1/10mm oder 1/100mm verwendet. Die Abbildungsmatrix M ist eine perspektivische Transformation, die eine Rotation, eine Translation und eine Reskalierung enthalten kann. Mit Hilfe der aus den Eckpunkten oder anderen ausgezeichneten Punkten des Kalibriercodes 100 bestimmten Abbildungsmatrix können dann anschlie-ßend auch beliebige andere Bildpunkte in das metrische Koordinatensystem umgerechnet werden.

Figur 4 zeigt beispielhaft die Anwendung der Transformationsvorschrift auf zwei Punkte eines Objekts 104, deren Abstand vermessen werden soll. Die Transformation korrigiert dabei vor der Bestimmung des euklidischen Abstands die Verzerrungen. Die Transformation muss nicht notwendig wie dargestellt zu einer senkrechten Orientierung des zu vermessenden Abstands führen. Der Abstand der beiden Punkte nach der Transformation liefert in jedem Fall den um die Verzeichnung korrigierten metrischen Längenwert.

Die einmal während des Kalibriervorgangs bestimmte Transformationsvorschrift behält ihre Gültigkeit nur so lange, wie die Kamera 10 gegenüber den zu lesenden Codes 14 beziehungsweise den zu vermessenden Objekten ihre Perspektive behält. Anhand der Figur 5 wird nun eine Ausführungsform erläutert, bei dem die Kamera 10 automatisch während des Betriebs erkennt, ob eine Neukalibrierung erforderlich ist. Wenn das der Fall ist, kann beispielsweise eine entsprechende Anzeige vorgenommen oder ein Schaltausgang gesetzt werden.

Dazu wird angenommen, dass die Kamera 10 nicht allein zur Vermessung von Objekten eingesetzt ist, sondern zumindest hin und wieder einen Code 14 liest. Dessen absolute Geometrie ist in Abhängigkeit des Codetyps bekannt, beispielsweise eine Rechteckform.

Figur 5 zeigt in ihrem linken Teil einen beispielhaft verzerrt aufgenommenen Code 14 mit einer trapezförmigen Umhüllenden 102. Aus der Kalibrierung ist die Transformationsvorschrift bekannt, welche diesen Code 14 zu einem rechteckigen Code entzerrt. Aufgrund einer Veränderung der Position beziehungsweise Orientierung der Kamera 10 oder einer veränderten Optik führt diese Transformation aber in der in Figur 5 gezeigten Situation nicht mehr zu einem Rechteck, sondern zu der im rechten Teil der Figur 5 beispielhaft gezeigten trapezförmigen Umhüllenden. Daraus kann die Kamera 10 schließen, dass die gespeicherte Kalibrierung nicht mehr gültig ist.

Praktisch kann die Rechteckform daran geprüft werden, ob die Winkel an den Eckpunkten des transformierten Codebereichs 14 zumindest innerhalb einer gewissen Toleranz 90° betragen. Die Toleranzschwelle kann für die Anforderungen der Vermessungsaufgabe angepasst gewählt werden. Wird eine größere Abweichung erkannt, so gibt die Kamera 10 eine entsprechende Fehlermeldung oder eine Aufforderung aus, den Kalibriercode 100 erneut für eine Neukalibrierung zu präsentieren.

Die Kamera 10 kann auch weiterhin Vermessungsergebnisse ausgeben und diese mit einem Zusatz versehen, dass die Genauigkeit möglicherweise durch fehlerhafte Kalibrierung beeinträchtigt ist. Es kann auch versucht werden, das System automatisch anhand der Abweichungen der Geometrie des zuletzt aufgenommenen Codes 14 nach der Transformation von einem Rechteck zu rekalibrieren. Dabei können aber allenfalls berechtigte Annahmen hinsichtlich der Form, nicht aber der unbekannten absoluten Größen dieses Codes 14 zugrunde gelegt werden, so dass die Rekalibrierung unterbestimmt und damit im Vergleich zu einer Neukalibrierung mit Kalibriercode 100 ungenau bleibt.

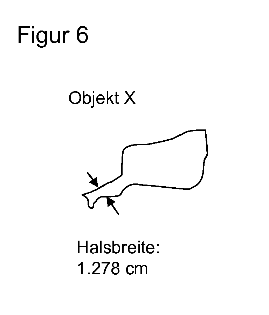

Die Transformationsvorschrift, welche den Kalibriercode 100 in einen verzerrungsfreien Kalibriercode 100 überführt, kann prinzipiell auf beliebige Bildausschnitte angewandt werden. So kann beispielsweise ein perspektivisch entzerrtes Grauwertbild erzeugt werden. Zusätzlich kann ein Pixel über Interpolationstechniken in Subpixel, beispielsweise 10x10 Subpixel aufgelöst werden. Das ist auch hilfreich, um Treppeneffekte durch die Transformation abzumildern. Es entsteht ein hochaufgelöstes metrisches Messbild oder ein Teilausschnitt davon. In dieses Messbild können auch die Messpunkte zur Vermessung bestimmter Strukturen, gelesene Codeinformationen und weitere Zusatzinformationen eingeblendet werden. Figur 6 zeigt dies beispielhaft für das Objekt und eine darin bestimmte metrische Abmessung. Derartige Messbilder helfen, die Messsituation rasch visuell zu erfassen und zu prüfen. Die Bilder werden vorzugsweise als Overlay-Dateien ausgegeben, beispielsweise als XML-Datei, wobei die Bilddaten und die Zusatzinformationen unterschiedliche Strukturinformationen darstellen. Dadurch sind die Zusatzinformationen in eindeutiger, allgemein lesbarer Form an die Bilddaten gekoppelt, und zugleich bleibt die ursprüngliche Bildinformation vollständig erhalten.

## Patentansprüche

1. Optoelektronische Vorrichtung (10) zur Vermessung von Struktur- oder Objektgrößen, die ein Lichtempfangselement (20) zur Umwandlung von Empfangslicht in Bilddaten, eine dem Lichtempfangselement (20) vorgeordnete Empfangsoptik (16, 18) sowie eine Auswertungseinheit (22) aufweist, die dafür ausgebildet ist, Codebereiche in den Bilddaten aufzufinden und Codeinformationen aus den Codebereichen auszulesen, Strukturen oder Objekte in den Bilddaten zu identifizieren, deren Abmessungen in Bildpunkten zu bestimmen und die Abmessungen anhand eines Skalierungsfaktors in absolute, insbesondere metrische Längeneinheiten umzurechnen und den Skalierungsfaktor in einem Kalibriervorgang aus Abmessungen eines Kalibriercodes (100) zu berechnen, dessen Codeinformationen eine Größenangabe für den Kalibriercode (100) in den absoluten Längeneinheiten umfassen, sowie eine Transformationsvorschrift zu bestimmen, welche eine perspektivische Verzerrung korrigiert und so die perspektivisch verzerrte relative Geometrie des Kalibriercodes (100) in den Bilddaten in eine absolute, tatsächliche Geometrie ohne perspektivische Verzerrung überführt,
**dadurch gekennzeichnet,**
**dass** die Auswertungseinheit (22) dafür ausgebildet ist, automatisch während des Betriebs, in dem die Vorrichtung (10) zum Lesen von Codes (14) eingesetzt ist, eine Fehlkalibrierung zu erkennen, indem die Transformationsvorschrift auf einen zu lesenden Code (14) angewandt und geprüft wird, ob der derart transformierte Code (14) eine erwartete absolute Geometrie aufweist.

2. Vorrichtung (10) nach Anspruch 1,
wobei die Auswertungseinheit (22) dafür ausgebildet ist, beim Auslesen des Kalibriercodes (100) eine Kennung zu überprüfen, anhand derer der Kalibriercode (100) als solcher erkennbar ist.

3. Vorrichtung nach Anspruch 1 oder 2,
wobei die Auswertungseinheit (22) dafür ausgebildet ist, während des Kalibriervorgangs die Abmessungen des Kalibriercodes (100) von Ecke zu Ecke zu bestimmen.

4. Vorrichtung (10) nach einem der vorhergehenden Ansprüche,
wobei die Auswertungseinheit (22) dafür ausgebildet ist, für die Bestimmung des Skalierungsfaktors eine fehlerfreie Lesung des Kalibriercodes (100) zu verwenden.

5. Vorrichtung (10) nach einem der vorhergehenden Ansprüche,
wobei die Auswertungseinheit (22) dafür ausgebildet ist, die erwartete absolute Geometrie aus dem Kalibriercode (100) auszulesen.

6. Vorrichtung (10) nach einem der vorhergehenden Ansprüche,
wobei die Auswertungseinheit (22) dafür ausgebildet ist, die Transformationsvorschrift auf einen Teilbereich der Bilddaten anzuwenden, um ein perspektivisch entzerrtes Bild zu erzeugen.

7. Vorrichtung (10) nach einem der vorhergehenden Ansprüche,
wobei die Vorrichtung (10) als kamerabasierter Codeleser ausgebildet ist, dessen Lichtempfangselement (20) ein matrix- oder zeilenförmiger Bildsensor ist.

8. Vorrichtung (10) nach Anspruch 7,
wobei die Auswertungseinheit (22) dafür ausgebildet ist, durch Interpolation oder Mittelung Bildpunkte mit einer feineren Auflösung zu bestimmen als die Pixelauflösung des Bildsensors (20).

9. Vorrichtung (10) nach einem der vorhergehenden Ansprüche,
wobei die Auswertungseinheit (22) für die Decodierung von 1 D-Codes und 2D-Codes ausgebildet ist, insbesondere von Codes, die sich aus Balken, rechteckigen oder quadratischen Moduleinheiten zusammensetzen.

10. Vorrichtung (10) nach einem der vorhergehenden Ansprüche,
wobei eine Abstandsmesseinheit vorgesehen ist, insbesondere nach dem Prinzip der Lichtlaufzeitbestimmung, um den Abstand zu einem gelesenen Code oder einem erfassten Objekt zu bestimmen.

11. Vorrichtung (10) nach Anspruch 10,
wobei ein Speicher vorgesehen ist, um zusammen mit dem Skalierungsfaktor den Kalibrier-Leseabstand abzulegen, in dem der Kalibriercode (100) während des Kalibriervorgangs erfasst wurde, und wobei die Auswertungseinheit (22) dafür ausgebildet ist, mit Hilfe des Kalibrier-Leseabstands die Abmessungen erfasster Strukturen oder Objekte anhand von deren tatsächlichem Abstand während der Erfassung anzupassen.

## Claims

1. An optoelectronic apparatus (10) for measuring structural sizes or object sizes which has a light reception element (20) for converting received light into image data, a reception optics (16, 18) arranged before the light reception element (20) as well as an evaluation unit (22) which is configured to find code regions in the image data, to identify structures or objects in the image data, to determine their dimensions in image data points and to convert the dimensions into absolute units of length, especially metric length units, with reference to a scaling factor, and to determine the scaling factor in a calibration procedure from dimensions of a calibration code (100) whose code information includes a size indication for the calibration code (100) in the absolute units of length as well as to determine a transformation rule which corrects for perspective distortion and which transforms the perspective distorted geometry of the calibration code (100) in the image data into an absolute actual geometry without perspective distortion
**characterized in that** the evaluation unit (22) is configured to recognize an error calibration automatically in operation in which the apparatus (10) for reading codes (14) is used, by applying the transformation rule to a code to be read and check whether the thus transformed code (14) comprises an expected absolute geometry.

2. An apparatus (10) in accordance with claim 1,
wherein the evaluation unit (22) is configured to check an identifier when reading out the calibration code (100), with reference to which identifier the calibration code (100) as such is recognizable.

3. An apparatus in accordance with claim 1 or 2,
wherein the evaluation unit (22) is configured to determine the dimensions of the calibration code (100) from corner to corner during the calibration procedure.

4. An apparatus (10) in accordance with any of the preceding claims,
wherein the evaluation unit (22) is configured to use an error-free reading of the calibration code (100) for the determination of the scaling factor.

5. An apparatus (10) in accordance with any of the preceding claims,
wherein the evaluation unit (22) is configured to read out the expected absolute geometry from the calibration code (100).

6. An apparatus (10) in accordance with any of the preceding claims,
wherein the evaluation unit (22) is configured to apply the transformation rule to a part region of the image data to produce a perspectively equalized image.

7. An apparatus (10) in accordance with any of the preceding claims,
wherein the apparatus (10) is configured as a camera-based code reader whose light reception element (20) is a matrix-like or linear image sensor.

8. An apparatus (10) in accordance with any of the preceding claims,
wherein the evaluation unit (22) is configured to determine picture elements having a finer resolution than the pixel resolution of the image sensor (20) by interpolation or averaging.

9. An apparatus (10) in accordance with any of the preceding claims,
wherein the evaluation unit (22) is configured for the decoding of 1 D codes and 2D codes, especially codes which are made up of bars or rectangular or square module units.

10. An apparatus (10) in accordance with any of the preceding claims,
wherein a distance measurement unit is provided to determine the distance from a read code or from a detected object, especially according to the principle of the time of flight of light.

11. An apparatus (10) in accordance with claim 10,
wherein a memory (22) is provided to store, together with the scaling factor, the calibration reading distance at which the calibration code (100) was detected during the calibration procedure, and wherein the evaluation unit (22) is configured to adapt the dimensions of detected structures or objects using their actual distance during the detection with the aid of the calibration reading distance.

## Revendications

1. Dispositif opto-électronique (10) pour mesurer des tailles de structure ou des tailles d'objets et qui présente un élément de réception de lumière (20) pour convertir la lumière reçue en données d'image, une réception optique (16, 18) disposé avant l'élément de réception de lumière (20) ainsi qu'une unité d'évaluation (22) qui est configurée pour rechercher des régions de code dans les données d'image, pour identifier des structures ou des objets dans les données d'image, afin de déterminer leurs dimensions dans les points de données d'image et pour convertir les dimensions en unités absolues de longueur, en particulier unités de longueur métriques, en référence à un facteur d'échelle, et pour déterminer le facteur d'échelle dans une procédure d'étalonnage de dimensions d'un code d'étalonnage (100) dont le code d'information comprend une indication de taille pour le code d'étalonnage (100) dans les unités absolues de longueur ainsi que pour déterminer une règle de transformation qui corrige la distorsion en perspective et qui transforme la géométrie relative en perspective déformée du code d'étalonnage (100) dans les données d'image en une géométrie réelle absolue, sans distorsion de la perspective **caractérisé en ce que** l'unité d'évaluation (22) est configurée pour reconnaître un étalonnage d'erreur automatiquement en fonctionnement dans lequel le dispositif (10) pour les codes de lecture (14) est utilisé, en appliquant la règle de transformation, pour un code à lire et vérifier si le code ainsi transformé (14) comprend une géométrie absolue attendue.

2. Dispositif (10) selon la revendication 1,
dans lequel l'unité d'évaluation (22) est configurée pour vérifier un identifiant lors de la lecture du code d'étalonnage (100), en référence à ce que le code d'étalonnage (100) est reconnaissable en tant que tel.

3. Appareil selon la revendication 1 ou 2,
dans lequel l'unité d'évaluation (22) est configurée pour déterminer les dimensions du code de calibration (100) de coin en coin pendant la procédure d'étalonnage.

4. Dispositif (10) selon l'une quelconque des revendications précédentes,
dans lequel l'unité d'évaluation (22) est configurée pour utiliser une lecture sans erreur du code d'étalonnage (100) pour la détermination du facteur d'échelle.

5. Dispositif (10) selon l'une quelconque des revendications précédentes,
dans lequel l'unité d'évaluation (22) est configurée pour lire la géométrie absolue attendue à partir du code d'étalonnage (100).

6. Dispositif (10) selon l'une quelconque des revendications précédentes,
dans lequel l'unité d'évaluation (22) est configurée pour appliquer la règle de transformation, à une région d'une partie des données d'image pour produire une image en perspective égalisée.

7. Dispositif (10) selon l'une quelconque des revendications précédentes,
dans lequel l'appareil (10) est configuré comme un lecteur de code basé sur une caméra dont l'élément de réception de lumière (20) est un capteur d'image matricielle ou linéaire.

8. Dispositif (10) selon l'une quelconque des revendications précédentes,
dans lequel l'unité d'évaluation (22) est configurée pour déterminer des éléments d'image ayant une résolution plus fine que la résolution de pixel du capteur d'image (20) par interpolation ou calcul de moyenne.

9. Dispositif (10) selon l'une quelconque des revendications précédentes,
dans lequel l'unité d'évaluation (22) est configurée pour le décodage de codes 1 D et 2D, en particulier des codes qui sont constitués de barres ou unités modulaires de forme rectangulaire ou carrée.

10. Appareil (10) selon l'une quelconque des revendications précédentes,
dans lequel une unité de mesure de distance est prévue pour déterminer la distance à partir d'un code de lecture ou à partir d'un objet détecté, en particulier selon le principe du temps de vol de la lumière.

11. Appareil (10) selon la revendication 10,
dans lequel une mémoire (22) est prévue pour stocker, en même temps que le facteur de mise à l'échelle, la distance de calibrage de la lecture au cours de laquelle le code d'étalonnage (100) a été détecté au cours de la procédure d'étalonnage, et dans lequel l'unité d'évaluation (22) est configurée pour adapter les dimensions détectée de structures ou d'objets en utilisant la distance réelle au cours de la détection à l'aide de la distance de calibrage de la lecture.
